# EUROPEAN PATENT APPLICATION

(11) **EP 0 887 588 A2**
(43) Date of publication of application: **30.12.1998**
(21) Application number: 98830346.7
(22) Date of filing: 04.06.1998
(51) Int. Cl.: F22B 1/28, F22B 37/78

(54) **System for automatically refilling the boiler with water electrical appliances that employ steam**

(30) Priority: 05.06.1997 IT TE970005
(71) Applicant: Hot - Line S.r.l., 64016 Sant' Egidio Alla Vibrata (Teramo) (IT)
(72) Inventor: Cesaroni, Adriano, 64016 Sant'Egidio Alla Vibrata (Teramo) (IT)
(74) Representative: Mannucci, Michele

(57) **Abstract**

System for automatically refilling the boiler with water in electrical appliances that employ steam in order to operate. A water circuit (17A, 17B) is provided outside the boiler (11), in which the water reproduces the water level inside the boiler; a sensor (19) is inserted into said circuit and is linked to an electronic module (21), which sensor (19) creates an electrical circuit through the water in the boiler and signals whether or not water is present at the level of said sensor so as, on that basis, to control the electric pump (7) by means of said electronic module.

## Description

The present invention relates to a system for automatically filling with water the boiler which is usually built into electrical appliances that employ steam in order to operate (on a domestic or industrial scale) such as, for example, cleaning machines, irons, combination vacuum cleaners, extraction hydrojets, hydrocleaners, or the like.

The prior art includes various systems for filling electrical appliances of said type with water, which is then converted into steam, but all of them present some technical drawbacks in use. These drawbacks are eliminated by the present invention.

Among the systems hitherto available on the market, the following may be mentioned.

An instantaneous system: cold water, which is poured into a plastic container, is then transferred by means of an electric pump into a heating vessel which, once it reaches a temperature of approximately 160°, converts the water into steam which escapes through an open outlet in said vessel. The drawback with this system is that, over time and with use, limescale accumulates inside the vessel and clogs up the outlet, preventing the steam produced from escaping freely and thereby reducing the efficiency of the electrical appliance.

A pressurized system: the most standard, in which the water to be converted into steam is poured directly into the boiler where it is heated and converted into steam which then escapes through one or more outlets in the boiler, thereby enabling the appliance to operate. The drawback with this system - in addition to the formation of limescale inside the boiler - is that, once all the water has been used up, in order to pour more water into the boiler, the latter has to be opened up directly, but this can only be done once it has cooled down. As will be obvious, this means that time is wasted while the appliance is inoperative.

A system with automatic filling, which is the most sophisticated system to date, comprises a tank of cold water, a pump whose function is to transfer water at a certain pressure, and a boiler which is kept permanently under pressure and in which the liquid is kept at a constant level; the water level inside the boiler is regulated by means of various devices. The temperature can be read using a thermostat, with immersed floats or sensors or with a weighing system; by indicating the water level on the outside of the appliance, it is then possible to see when the electric pump needs to be actuated in order to transfer cold water from the tank into the boiler. However, the devices used to read the water level inside the boiler have significant disadvantages:
- using a thermostat has the disadvantage of the temperature tolerance and therefore does not guarantee a constant water level inside the boiler;
- using sensors and floats has the disadvantage that, since said instruments operate inside the boiler, i.e. within the water vapor, they will begin to lose their effectiveness over time as a result of the formation of limescale;
- using a weighing system has the disadvantage that the water-filling system does not work properly when the appliance is moved during use, since the boiler is supported by a spring which goes up and down depending on the weight of the water remaining inside the boiler.

The basic object of the present invention is to avoid said drawbacks by producing a system for automatically refilling the boiler with water in electrical appliances that employ steam in order to operate - such as cleaning machines, irons, combination vacuum cleaners, hydrocleaners, or the like - by means of an electric pump which is actuated automatically in order to top up the level of water in the boiler. The system according to the invention comprises: a water circuit outside the boiler, in which the water reproduces the water level inside the boiler; a sensor inserted into said circuit and linked to an electronic module, which sensor creates an electrical circuit through the water in the boiler and signals whether or not water is present at the level of said sensor so as, on that basis, to control the electric pump by means of said electronic module.

In practice, said circuit outside the boiler comprises two tubular pipes made of electrically insulating material, such as pipes made of synthetic resin of the type known, for example, under the trade name "Teflon", these pipes connecting the sensor to a high point and a low point in the boiler, the sensor thus being electrically insulated from the boiler, which is made of metal.

A potential for controlling the operation of the electric pump is switched on and off by the sensor on the basis of the water level relative to said sensor.

The system can comprise a tank, from which the electric pump draws water and feeds it into the boiler; in this case an instrument for reading the level of the cold water in said tank is provided, together with a warning indicator - of acoustic, visual or other type - which is controlled by said instrument and is designed to emit a signal when the level in said tank of cold water has fallen below a predetermined limit.

With the arrangement defined above, the drop in the level of water inside the boiler due to its evaporation is signaled by an element outside the boiler which consists of the sensor insulated between two tubes made of "Teflon" or the like; on the basis of the signal produced by the sensor, water is fed into the boiler, which is connected to the tank of cold water by means of the electric pump and a non-return valve, and, due to the principle of communicating vessels, the water entering the boiler also causes the water level in the tubes to rise until it reaches the sensor. As soon as the water level comes into contact with the sensor, the latter creates an electrical circuit through the water which causes the electric pump to be switched off, the latter automatically ceasing to transfer water from the tank of cold water to the boiler.

The water conveyed into the boiler is heated by a heating element up to its boiling point, equal to about 130°-140°C. Said heating element is also connected to a thermostat whose function is to keep the temperature of the water constant; the water in the tubes of insulating material is virtually not heated at all.

Using the appliance consumes both steam and water and the level of water in the boiler drops so that the sensor will tend to be no longer in contact with the water. As soon as this happens, the electric pump is automatically actuated via its connection to the electronic module, such that water is transferred from the tank into the boiler. The water level consequently rises and once again reaches the sensor, thereby reestablishing the circuit which will automatically switch the electric pump off.

It follows from the above description that said system overcomes all the disadvantages encountered with systems used hitherto - such as the formation of limescale, which impairs correct operation of the instruments inside the boiler such as sensors or floats, the effects of movement during use on the weighing system, or the time wasted while waiting for the boiler to cool down before it can be opened in order to pour more water in - since the reading of the water level and the consequent feeding of the boiler takes place using a system outside said boiler, employing the principle of the variation in a positive low-voltage potential based on contact between the water and the sensor.

The elements that principally contribute to the creation of the system according to the invention for automatically feeding water into the boiler in electrical steam appliances are:
- a sensor which is outside the boiler, is insulated by two tubes made of electrically insulating material and is designed to short-circuit the low voltage on contact with the water;
- the electronic module which is connected to the instrument for reading the level of cold water in the tank, the electric pump, the sensor and the solenoid valve, and which automatically regulates the automatic transfer of the water, stopping said transfer when the levels of liquid are such as to enable the appliance to operate;
- the external warning indicator, for example of acoustic type, which is also connected to the electronic module and automatically warns the user if the level of water in the tank has dropped.

A better understanding of the invention will be gained by following the description and the accompanying drawing, which shows a practical and non-limiting example of said invention. In the drawing:

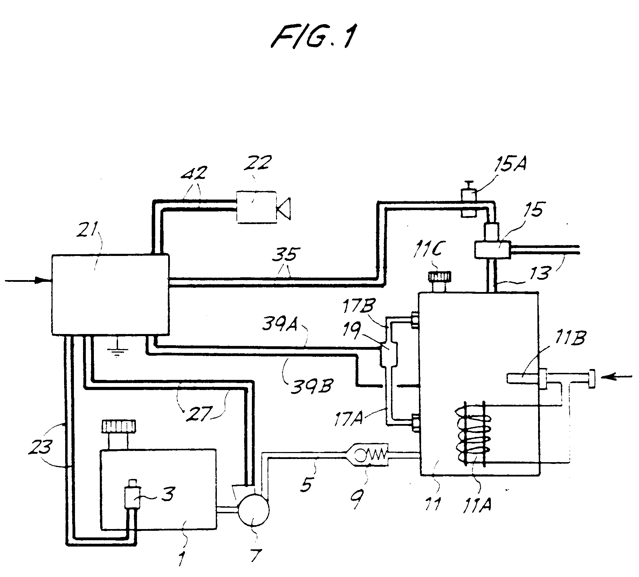

Fig. 1 shows an overall view, and
Figs 2 and 3 illustrate the boiler together with all the elements needed to detect the variation in the low voltage, which identifies the position of the water level.

In the drawing, the reference 1 denotes a cold-water tank which is linked to an instrument 3 for reading the level of the water; the tank 1 can be made of plastic and can be fed manually, via a small opening 1A. A pipe 5, with an electric pump 7 and a priming and check valve 9, i.e. a non-return valve, leads to a boiler 11, fitted with an electric heating element 11A and with a thermostat 11B; the boiler 11 is made of metal and can withstand the internal pressure generated; the boiler 11 is fitted with a safety valve 11C. The reference 13 denotes an outlet pipe via which the steam (or, where appropriate, the superheated water) is conveyed to the user appliance; a solenoid valve 15, which is controlled by the user via a switch 15A, controls the rate at which the steam is dispensed. Two tubes 17A, 17B made of electrically insulating material, for example of a synthetic resin such as that known as "Teflon", are connected to the boiler 11 at two different levels; two tubes 17A, 17B converge toward a sensor 19 which is designed to be submerged in the water from the boiler 11 when the water in the boiler rises above the level defined by the position of the sensor 19; the sensor forms a metallic contact with the water when said level is reached inside the boiler.

The reference 21 denotes an electronic module which operates at a low or very low voltage and is earthed (or grounded). Said electronic module 21 is connected to the various components,and in particular: the reading instrument 3 via a circuit 23, the pump 7 via a circuit 27, the solenoid valve 15 via a circuit 35, and an acoustic warning indicator 22 via a circuit 42. In addition, two lines 39A, 39B connect the electronic module 21 to the sensor 19 and to the body of the boiler 11, respectively. The heating element 11A is connected to its own energy supply via the thermostat 11B and via its own switch.

When the water level inside the boiler 11, and therefore inside the pipe created by the tubes 17A, 17B and the casing of the sensor 19, reaches the sensor 19, a circuit is created between the line 39A, the sensor 19 and, through the water, the metal body of the boiler 11, and the line 39B; via the module 21, the circuit thus created causes the pump 9 circuit 27 to open. The electric pump 7 is therefore automatically switched off when the water entering the Teflon tube 17A touches the sensor 19, whereas, conversely, the electric pump 7 is actuated when the water inside the Teflon tube 17A does not touch the sensor 7. The water level inside the tubes 17A, 17B is exactly equal to the water level inside the boiler, where the water is heated, but the temperature of the water inside said tubes 17A, 17B and inside the casing of the sensor 19 is much lower than that in the boiler and, therefore, limescale deposits are virtually non-existent, thereby avoiding the disadvantages mentioned above in connection with current known solutions.

The resistor 11A for heating the water inside the boiler and the thermostat 11B for controlling the steam can be independent of the electronic module 21.

As soon as the water inside the boiler is no longer in contact with the sensor 19, as a result of a drop in the water level following use of the appliance, the sensor 19 connected to the electronic module 21 causes the electric pump 7 to be actuated and to transfer water. The electric pump 7 is switched off as soon as the water inside the boiler and the tubes 17A, 17B reaches the sensor 19 once again.

When the level of water in the cold-water tank 1 has dropped, the level-reading instrument 3, which is connected to the electronic module 21, activates the indicator 22, thereby warning the user who can then promptly see to filling the tank 1 with water.

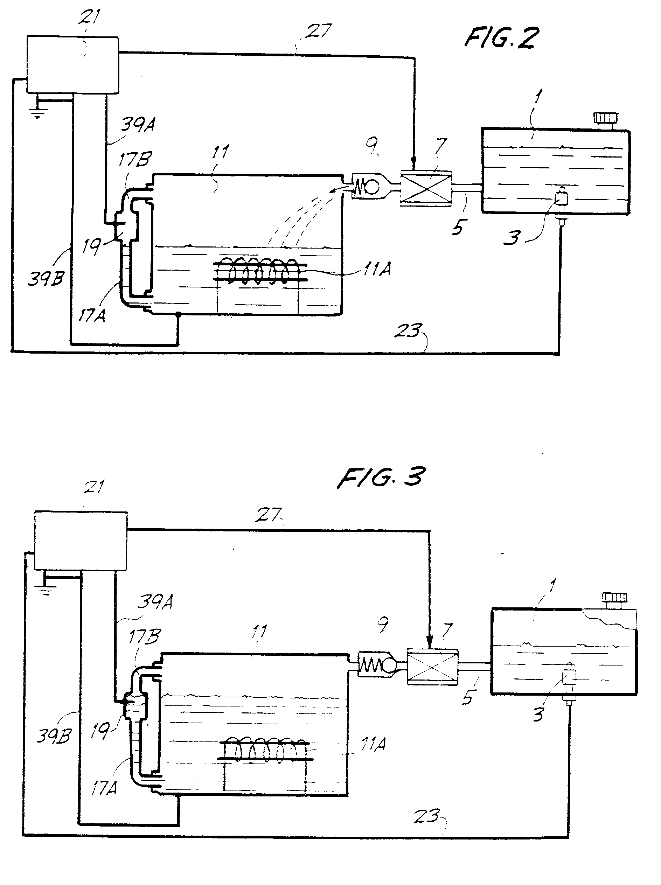

Fig. 2 diagrammatically shows the stage in which water is automatically fed from the tank 1 into the boiler 11 and - on the basis of the principle of communicating vessels - also into the tubes 17A, 17B.

In Fig. 3, the water level has reached the sensor 19 which, being connected to the electronic module 21 causes the electric pump 7 to be switched off, the latter automatically ceasing to transfer water from the tank 1 to the boiler 11 since the positive low-voltage potential on the sensor 19 in contact with the water becomes zero.

Basically, when the sensor 19 is at a positive potential, water is fed into the boiler; when, on the other hand, the sensor is at zero potential, on account of the fact that contact has been made with the water in the boiler, water is no longer fed into the boiler.

It would also be possible, for example, to have a sensor with two contacts set apart, between which a control circuit could be set up by the water.

It should be understood that the drawing shows only one example, given solely as a practical demonstration of the invention, and that the latter can vary in its forms and arrangements without thereby departing from the scope of the guiding concept of said invention.

## Claims

1. System for automatically refilling the boiler with water in electrical appliances that employ steam in order to operate, such as cleaning machines, irons, combination vacuum cleaners, hydrocleaners or the like, by means of an electric pump which is actuated automatically in order to top up the level of water in the boiler, characterized in that it comprises: a water circuit (17A, 17B) outside the boiler (11), in which the water reproduces the water level inside the boiler; a sensor (19) inserted into said circuit and linked to an electronic module (21), which sensor (19) creates an electrical circuit through the water in the boiler and signals whether or not water is present at the level of said sensor so as, on that basis, to control the electric pump (7) by means of said electronic module.

2. System as claimed in claim 1, characterized in that said circuit outside the boiler comprises two tubular pipes (17A, 17B) made of electrically insulating material which connect the sensor (19) to a high point and a low point in the boiler, the sensor (19) thus also being electrically insulated from the boiler.

3. System as claimed in claim 1 or 2, characterized in that a potential for controlling the operation of the pump (7) is switched on and off by the sensor (19) on the basis of the water level relative to said sensor.

4. System as claimed in at least one of the preceding claims, comprising a tank (1), from which the electric pump (7) draws water and feeds it into the boiler, characterized in that it comprises an instrument (3) for reading the level of the cold water in said tank (1) and a warning indicator (22) - of acoustic or other type - which is controlled by said instrument and is designed to emit a signal when the level in said tank of cold water has fallen below a predetermined limit.
